# EUROPEAN PATENT APPLICATION

(11) **EP 4 617 992 A1**
(43) Date of publication of application: **17.09.2025**
(21) Application number: 23918379.1
(22) Date of filing: 26.01.2023
(51) Int. Cl.: G06Q 50/10

(54) **DATA DISTRIBUTION MANAGEMENT SYSTEM, DATA DISTRIBUTION MANAGEMENT METHOD, AND DATA DISTRIBUTION MANAGEMENT PROGRAM**

(71) Applicant: MITSUBISHI ELECTRIC CORPORATION, Chiyoda-ku Tokyo 100-8310 (JP)
(72) Inventor: HORI, Akiho, Tokyo 100-8310 (JP); KAEDE, Satoshi, Tokyo 100-8310 (JP)
(74) Representative: Pfenning, Meinig & Partner mbB
(86) International application number: PCT/JP2023/002408
(87) International publication number: WO 2024/157414

(57) **Abstract**

A data distribution management system (90) includes a data distribution management device (200). The data distribution management device (200) includes a utilization status data acquisition unit (230) to acquire utilization status data indicating a utilization status in a data utilization device (400) of utilization data including at least part of provided data that is provided by a mobility as a service (MaaS)-related operator and corresponds to movement of a moving object, and includes a utilization status data transmission unit (240) to transmit the utilization status data as data corresponding to the provided data to a data value calculation device (300) including an incentive calculation unit (310) to calculate an incentive for the MaaS-related operator for providing the provided data based on the utilization status data.

## Description

### Technical Field

The present disclosure relates to a data distribution management system, a data distribution management method, and a data distribution management program.

### Background Art

In the coming mobility as a service (MaaS) society, it is expected that a federated ecosystem will be formed where stakeholders such as transportation operators and other transportation media operators coexist and mutually provide information, thereby realizing smart mobility solutions. To realize smart mobility solutions, data collaboration among the stakeholders is required. As the core of data collaboration among the stakeholders, a data distribution management system may be pointed out.

To realize MaaS, it is essential for operators to collaborate to expand the transportation revenue of each operator by providing facility data and information data among the operators, and so on.

Patent Literature 1 discloses a system that can automatically reserve taxi vehicle dispatch by a center processing device that makes dispatch requests to a taxi dispatch system based on user entry date and time information, a train operation status, and so on and a taxi dispatch system that transmits results of the dispatch requests to the center processing device.

### Citation List

### Patent Literature

Patent Literature 1:JP 2004-185494 A

### Summary of Invention

### Technical Problem

Patent Literature 1 discloses a system that performs efficient taxi dispatch using data provided by a railway operator. However, Patent Literature 1 neither discloses nor suggests a mechanism to grasp a utilization status, such as the number of times a taxi operator has used data provided by the railway operator or profit obtained by the taxi operator by using the data, calculate an incentive for the railway operator, who is the provider of the data, based on the grasped utilization status, and provide the calculated incentive to the railway operator.

Therefore, when using the technology disclosed in Patent Literature 1, a problem is that MaaS-related operators, such as railway operators, may not provide data due to lack of benefit in providing data for the MaaS-related operators.

The present disclosure aims to encourage MaaS-related operators to provide data by setting gain for the MaaS-related operators for providing data.

### Solution to Problem

A data distribution management system according to the present disclosure includes a data distribution management device, and the data distribution management device includes
a utilization status data acquisition unit to acquire utilization status data indicating a utilization status in a data utilization device of utilization data including at least part of provided data that is provided by a mobility as a service (MaaS)-related operator and corresponds to movement of a moving object; and
a utilization status data transmission unit to transmit the utilization status data as data corresponding to the provided data to a data value calculation device including an incentive calculation unit that calculates an incentive for the MaaS-related operator for providing the provided data based on the utilization status data.

### Advantageous Effects of Invention

According to the present disclosure, an incentive calculation unit calculates an incentive for a MaaS-related operator for providing provided data. The calculated incentive may be set as gain for the MaaS-related operator for providing the data. Therefore, according to the present disclosure, by setting gain for MaaS-related operators for providing data, it is possible to encourage the MaaS-related operators to provide data.

### Brief Description of Drawings

Fig. 1 is a diagram illustrating an example of the configuration of a data distribution management system 90 according to Embodiment 1.
Fig. 2 is a diagram describing incentives according to Embodiment 1.
Fig. 3 is a diagram describing incentives according to Embodiment 1, where (a) is a table showing additional points according to freshness, (b) is a table showing additional points according to a sampling period, and (c) is a table showing additional points according to the number of significant digits.
Fig. 4 is a diagram describing incentives according to Embodiment 1, where (a) is a table showing additional points according to profit, and (b) is a table showing additional points according to the number of references.
Fig. 5 is a flowchart illustrating the operation of the data distribution management system 90 according to Embodiment 1.
Fig. 6 is a diagram describing processing according to a variation of Embodiment 1.
Fig. 7 is a flowchart illustrating the operation of the data distribution management system 90 according to a variation of Embodiment 1.
Fig. 8 is a diagram describing incentives according to a variation of Embodiment 1.
Fig. 9 is a diagram describing processing according to a variation of Embodiment 1.
Fig. 10 is a flowchart illustrating the operation of the data distribution management system 90 according to a variation of Embodiment 1.
Fig. 11 is a diagram illustrating an example of the hardware configuration of a data provision device 100 according to a variation of Embodiment 1.
Fig. 12 is a diagram illustrating an example of the configuration of the data distribution management system 90 according to Embodiment 2.
Fig. 13 is a diagram illustrating an example of the configuration of the data distribution management system 90 according to Embodiment 3.
Fig. 14 is a flowchart illustrating the operation of the data distribution management system 90 according to Embodiment 3.

### Description of Embodiments

In the description and drawings of the embodiments, the same reference numerals are assigned to the same elements and corresponding elements. The description of elements with the same reference numerals is appropriately omitted or simplified. Arrows in diagrams mainly indicate flows of data or flows of processing. "Unit" may be appropriately interpreted as "circuit", "step", "procedure", "process", or "circuitry".

Embodiment 1.
This embodiment will be described in detail below with reference to the drawings.

### *** Description of Configuration ***

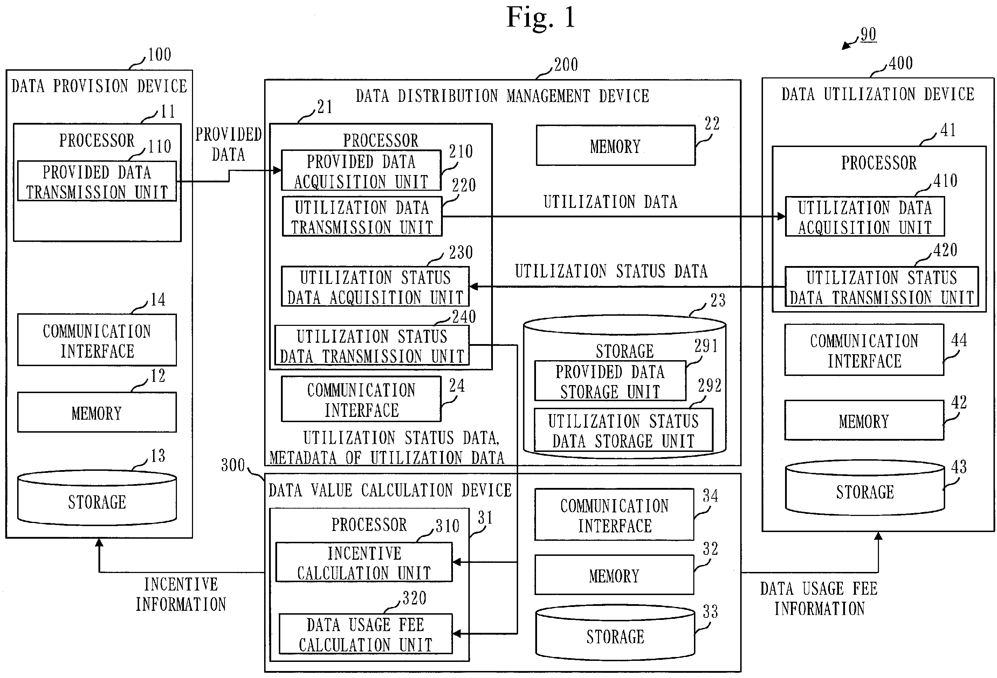

Fig. 1 illustrates an example of the configuration of a data distribution management system 90 according to this embodiment. As shown in this figure, the data distribution management system 90 includes a data provision device 100, a data distribution management device 200, a data value calculation device 300, and a data utilization device 400.

The data provision device 100 includes, as a functional component, a provided data transmission unit 110. The data provision device 100 is, as a specific example, an operation management system of a railway operator or a server that collects data from a transfer application.

The data distribution management device 200 includes, as functional components, a provided data acquisition unit 210, a utilization data transmission unit 220, a utilization status data acquisition unit 230, a utilization status data transmission unit 240, a provided data storage unit 291, and a utilization status data storage unit 292.

The data value calculation device 300 includes, as functional components, an incentive calculation unit 310 and a data usage fee calculation unit 320. The data value calculation device 300 calculates an incentive for the data provision device 100 for providing data and a data usage fee for the data utilization device 400.

The data utilization device 400 includes, as functional components, a utilization data acquisition unit 410 and a utilization status data transmission unit 420. The data utilization device 400 is, as a specific example, a taxi dispatch device or a bus operation management device.

The provided data transmission unit 110 transmits provided data to the data distribution management device 200. The provided data is data that is provided by a mobility as a service (MaaS)-related operator, corresponds to movement of a moving target, is composed of at least one of facility data and information data of the MaaS-related operator, and is, as a specific example, data related to train operation management. The facility data is data acquired at a facility of the MaaS-related operator and is, as a specific example, data indicating a state of the facility or data indicating people staying at the facility. The information data is data about movement using a service provided by the MaaS-related operator and is, as a specific example, operation management information, tracking information of the position of an object, or information indicating a movement record or movement plan of each customer.

The MaaS-related operator is an operator that conducts a business related to MaaS, serves as a data provider, and acquires information about movement of a moving target or processes information about movement of the moving target. The moving target is a person or object moving towards a destination. A plurality of persons or a plurality of objects, such as a group of people, may be collectively considered as one moving target. The MaaS-related operator is, as a specific example, a railway operator, a bus operator, a taxi operator, a rental car operator, a rental bicycle operator, or an operator running a transfer application. An operator that manages or runs a building where people who have moved using railways or the like stay and tracks movement of people using surveillance cameras or the like may also be considered a MaaS-related operator.

The provided data acquisition unit 210 acquires the provided data.

The provided data storage unit 291 stores the provided data. As a specific example, the provided data is associated with data indicating freshness of the provided data and data indicating a usage restriction on the provided data. The freshness of the provided data is an indicator determined based on a time period that has elapsed from a time point of acquisition of the provided data. The higher the freshness of the provided data, the more recent the acquisition of the provided data.

The utilization data transmission unit 220 treats data including at least part of the provided data stored in the provided data storage unit 291 as utilization data, and transmits the utilization data to the data utilization device 400. If there is a usage restriction on the provided data, the utilization data corresponding to the provided data is data that complies with the usage restriction on the provided data.

The utilization status data acquisition unit 230 acquires utilization status data from the data utilization device 400.

The utilization status data is data that indicates a utilization status of the utilization data in the data utilization device 400. Specifically, the utilization status data includes identification information of the provided data corresponding to the utilization data utilized by the data utilization device 400 and gain obtained by the data utilization device 400 or a data user who uses the data utilization device 400 by utilizing the utilization data. The gain may be interpreted as revenue or profit. The gain may also be benefit other than monetary profit, such as time saved by utilizing the utilization data. When the data utilization device 400 obtains gain by using the utilization data and other data, a value of gain corresponding to the utilization data may be a value obtained by multiplying the obtained gain by a contribution rate of the utilization data. The data user is a business operator or the like that uses the utilization data and is, as specific example, a taxi operator or a bus operator.

If the data utilization device 400 does not appropriately provide information indicating the gain corresponding to the utilization data, a penalty such as restricting provision of new utilization data may be imposed on the data utilization device 400.

The utilization status data storage unit 292 stores utilization status data with which the provided data and data indicating the freshness of the provided data at the time of utilization are associated.

The utilization status data transmission unit 240 transmits the utilization status data as data corresponding to the provided data to the data value calculation device 300. In preparation for a case where the incentive calculation unit 310 calculates value of data based on an attribute of the data, granularity of the data, or the like, the utilization status data transmission unit 240 may also transmit metadata of the utilization data to the data value calculation device 300 as needed. Metadata is data about data and indicates ancillary information about the main data.

The incentive calculation unit 310 calculates an incentive for the MaaS-related operator for providing the provided data corresponding to the utilization status data based on the utilization status data, and transmits incentive information indicating the calculated incentive to the data provision device 100. The incentive calculation unit 310 may calculate the incentive based on the freshness of the provided data.

As a specific example, policies for calculating incentives by the incentive calculation unit 310 (incentive calculation policies) are classified into three types: classification based on the type of data (Classification A), classification based on the granularity of data (Classification B), and classification based on the utilization status (Classification C).

Specific examples of policies included in each classification will be described below. The incentive calculation unit 310 may adopt a plurality of policies to calculate incentives. The plurality of policies may span across a plurality of classifications.

### (Classification A)

Policy A-1: Policy to set a high incentive when data directly linked to personal information is provided.

Policy A-2: Policy to set a high incentive when unprocessed data is provided.

Policy A-3: Policy to set a low incentive when unprocessed data is provided, in anticipation of the effort required to appropriately process the provided data (such as anonymization if it is personal information).

Policy A-4: Policy to set a high incentive when data related to power consumption is provided.

Policy A-5: Policy to set a high incentive when data related to operation management is provided.

Policy A-6: Policy to set a high incentive when data collected using a sensor is provided.

Policy A-7: Policy to calculate an incentive based on information about the location from where data is acquired. A specific example is a policy to set a high incentive for data acquired in a vehicle and set a low incentive for data acquired on the ground. Another specific example is a policy to set a high incentive for data acquired outside a station and set a low incentive for data acquired inside a station. A specific example of the data acquired outside the station is sensor data of a railway facility.

Policy A-8: Policy to set a high incentive when data acquired using communication between a vehicle and the ground is provided.

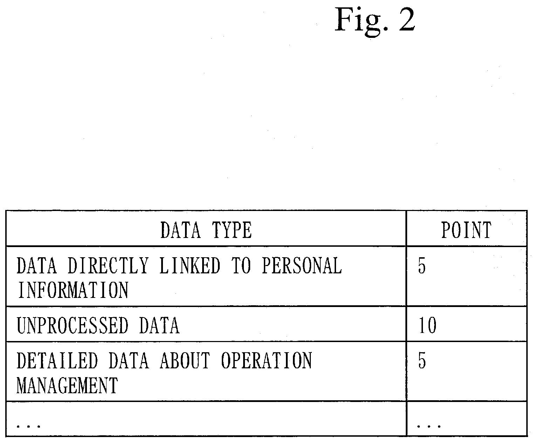

Fig. 2 is a diagram describing a specific example of additional points when the incentive calculation unit 310 adopts the policies included in Classification A. The incentive calculation unit 310 checks the type of data indicated by the metadata of the utilization data, and if the checked type of data corresponds to one of the types of data shown in the table in Fig. 2, the corresponding points are added to the incentive.

### (Classification B)

Policy B-1: Policy to set a high incentive when data with a high level of freshness is utilized, in acknowledgement of the value of the freshness of the data.

Policy B-2: Policy to set a high incentive when data with a low level of freshness is utilized, in anticipation of the management cost of the data.

Policy B-3: Policy to set an incentive according to a level of provided data. A specific example is a policy to set a high incentive when more detailed information or more specific information is provided.

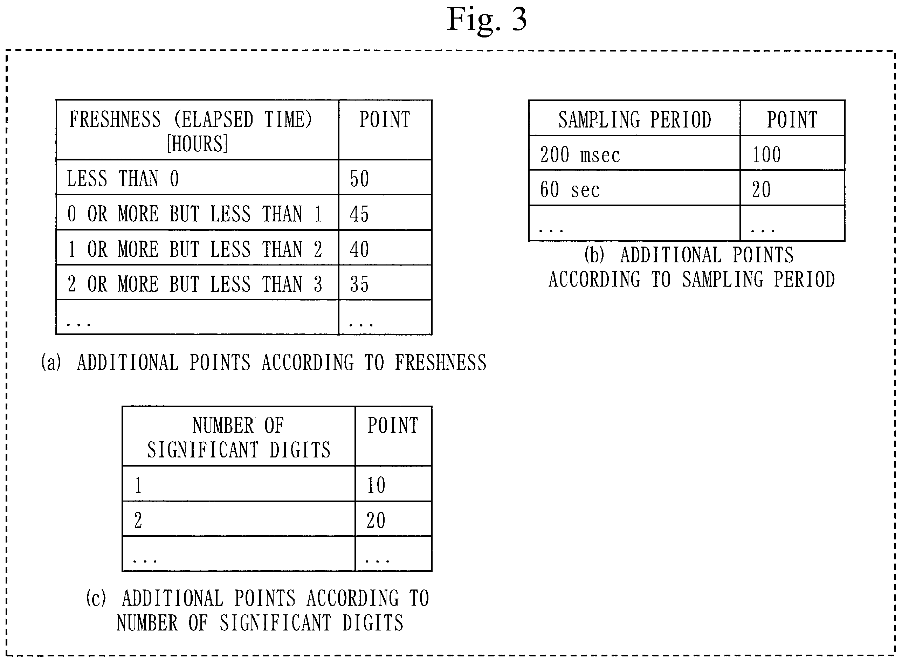

Fig. 3 is a diagram describing a specific example of additional points when the incentive calculation unit 310 adopts the policies included in Classification B. Note that (a) of Fig. 3 is a table showing additional points according to freshness, (b) of Fig. 3 is a table showing additional points according to a sampling period, and (c) of Fig. 3 is a table showing additional points according to the number of significant digits. Note that (a) of Fig. 3 is a table corresponding to Policy B-1, and the order of additional points is the reverse order of the order shown in (a) of Fig. 3 in a table corresponding to Policy B-2. Note that (b) of Fig. 3 is a specific example of sensor data of railway equipment, and the value according to the shortness of the sampling period may vary depending on the type of data.

When using (a) of Fig. 3, the incentive calculation unit 310 refers to a timestamp indicated by the metadata of the utilization data to check a time period that has elapsed since the provision of the data, and adds points to the incentive according to the freshness of the data.

When using (b) of Fig. 3, the incentive calculation unit 310 checks the sampling period of the data indicated by the metadata of the utilization data, and adds more points to the incentive as the sampling period of the data is shorter.

When using (c) of Fig. 3, the incentive calculation unit 310 checks the number of significant digits of the data indicated by the metadata of the utilization data, and adds more points to the incentive as the granularity of the data is finer. The granularity may be determined according to the units or the like indicated by the metadata.

### (Classification C)

Policy C-1: Policy to set a high incentive when data that is used multiple times is provided, or when a data user generates significant revenue from the provided data.

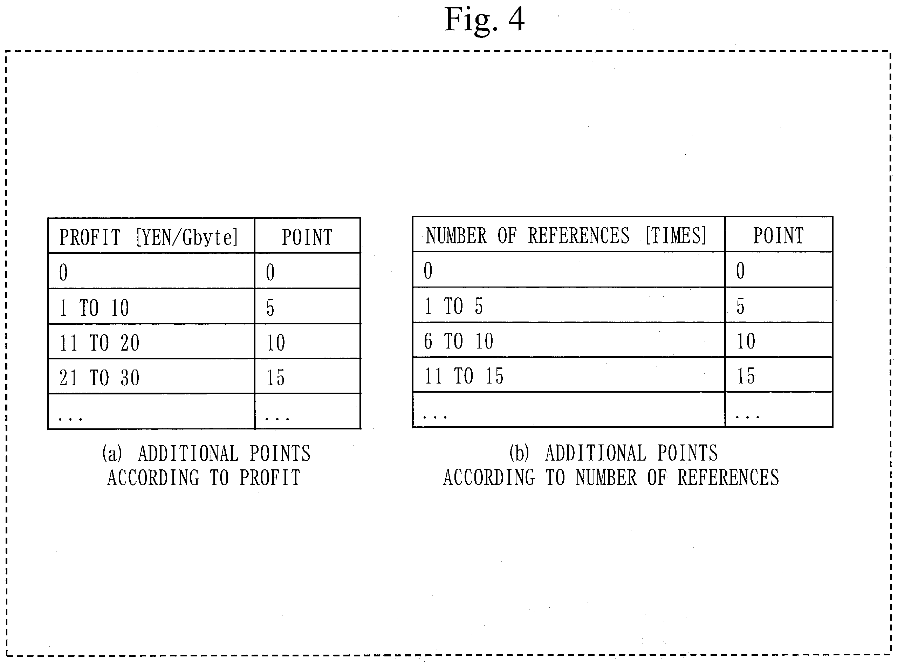

Fig. 4 is a diagram describing a specific example of additional points when the incentive calculation unit 310 adopts the policy included in Classification C. Note that (a) of Fig. 4 is a table showing additional points according to profit, and (b) of Fig. 4 is a table showing additional points according to the number of references.

When the utilization data is utilized by a data user, the incentive calculation unit 310 adds points to the incentive based on the profit obtained by the data user from utilizing the data, the number of references to the utilization data by the data user, or the like, as shown in (a) of Fig. 4 and (b) of Fig. 4.

The data usage fee calculation unit 320 calculates a data usage fee for utilization of the utilization data by the data utilization device 400 based on the utilization status data, and transmits data usage fee information indicating the calculated data usage fee to the data utilization device 400. Generally, the higher the corresponding incentive for the provided data, the higher the data usage fee.

A specific example of a formula for calculating the data usage fee is (the usage fee of the data distribution management device 200) + (a fixed rate of the incentive).

The data provision device 100 is a computer and includes, as hardware components, a processor 11, a memory 12, a storage 13, a communication interface 14, and so on. These hardware components are appropriately connected via signal lines. The data provision device 100 may be composed of a plurality of computers.

The hardware configuration of each of the data distribution management device 200, the data value calculation device 300, and the data utilization device 400 is substantially the same as the hardware configuration of the data provision device 100. Two or more of the devices constituting the data distribution management system 90 may be appropriately configured integrally. The data distribution management device 200 is also called a first computer. The data value calculation device 300 is also called a second computer.

The processor 11 is an integrated circuit (IC) that performs operational processing, and controls the hardware included in the computer. The processor 11 is, as a specific example, a central processing unit (CPU), a digital signal processor (DSP), or a graphics processing unit (GPU).

The data provision device 100 may include a plurality of processors as an alternative to the processor 11. The plurality of processors share the role of the processor 11.

Each of a processor 21, a processor 31, and a processor 41 is substantially the same as the processor 11.

The memory 12 is typically a volatile storage device and is, as a specific example, a random access memory (RAM). The memory 12 is also called a main storage device or a main memory. Data stored in the memory 12 is saved in the storage 13 as needed.

Each of a memory 22, a memory 32, and a memory 42 is substantially the same as the memory 12.

The storage 13 is typically a non-volatile storage device and is, as a specific example, a read only memory (ROM), a hard disk drive (HDD), or a flash memory. Data stored in the storage 13 is loaded into the memory 12 as needed.

Each of a storage 23, a storage 33, and a storage 43 is substantially the same as the storage 13.

The memory 12 and the storage 13 may be configured integrally.

The communication interface 14 is a receiver and transmitter. The communication interface 14 is, as a specific example, a communication chip or a network interface card (NIC).

Each of a communication interface 24, a communication interface 34, and a communication interface 44 is substantially the same as the communication interface 14.

Each unit of the data distribution management system 90 may appropriately use the communication interface 14 when communicating with other devices.

A storage of each device of the devices constituting the data distribution management system 90 stores a program that realizes the functions of each functional component. The program stored in each device is read into the memory of each device by the processor of each device, and is executed by the processor of each device. This realizes the functions of each functional component of each device.

The program stored in each device is collectively called a data distribution management program.

Data used when the data distribution management program is executed, data obtained by executing the data distribution management program, and so on are appropriately stored in a storage device. Each unit of the data distribution management system 90 appropriately uses the storage device. As a specific example, the storage device is composed of at least one of the memory 12, the storage 13, registers in the processor 11, and a cache memory in the processor 11. The term data and the term information may have equivalent meanings. The storage device may be independent of the computer.

The functions of the memory 12 and the storage 13 may be realized by other storage devices.

The data distribution management program may be recorded on a computer readable non-volatile recording medium. The non-volatile recording medium is, as a specific example, an optical disc or a flash memory. The data distribution management program may be provided as a program product.

### *** Description of Operation ***

A procedure for the operation of the data distribution management system 90 is equivalent to a data distribution management method. A program that realizes the operation of the data distribution management system 90 is equivalent to the data distribution management program.

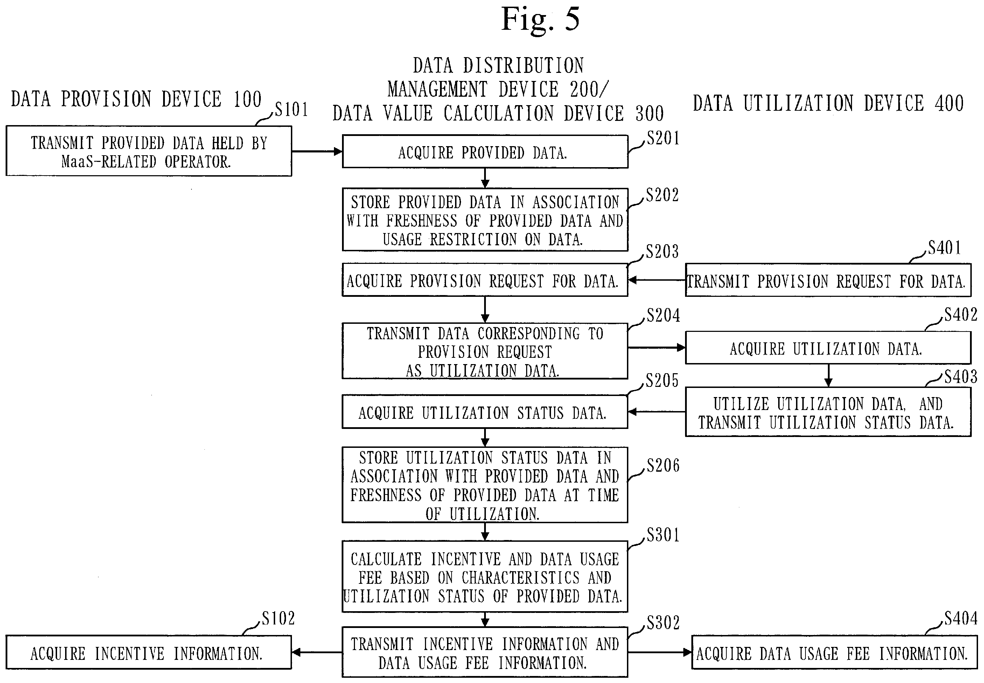

Fig. 5 is a flowchart illustrating an example of the operation of the data distribution management system 90. Using Fig. 5, the operation of the data distribution management system 90 will be described.

### (Step S101)

The provided data transmission unit 110 transmits provided data held by the MaaS-related operator to the data distribution management device 200.

### (Step S102)

The data provision device 100 acquires incentive information from the data value calculation device 300.

When a policy included in Classification A or a policy included in Classification B is adopted in the incentive calculation unit 310, the data provider may receive an incentive for providing data even if the provided data is not utilized.

### (Step S201)

The provided data acquisition unit 210 acquires the provided data from the data provision device 100.

### (Step S202)

The provided data acquisition unit 210 associates the acquired provided data with data indicating freshness of the acquired provided data and data indicating a usage restriction on the acquired provided data, and stores the provided data associated with these pieces of data in the provided data storage unit 291.

### (Step S203)

The utilization data transmission unit 220 acquires data indicating a provision request for utilization data from the data utilization device 400.

### (Step S204)

The utilization data transmission unit 220 transmits, as utilization data, data including at least part of the provided data corresponding to the provision request indicated by the acquired data to the data utilization device 400.

### (Step S205)

The utilization status data acquisition unit 230 acquires utilization status data from the data utilization device 400.

### (Step S206)

The utilization status data acquisition unit 230 associates the acquired utilization status data with data indicating the freshness of the utilization data at the time of utilization of the utilization data in the data utilization device 400, and stores the utilization status data associated with the data in the utilization status data storage unit 292.

### (Step S301)

The incentive calculation unit 310 calculates an incentive for the data provision device 100 for providing the provided data corresponding to the utilization data, based on the characteristics of the utilization data, the utilization status indicated by the utilization status data corresponding to the utilization data, and so on.

The data usage fee calculation unit 320 calculates a data usage fee for the data utilization device 400 for using the utilization data, based on the characteristics of the utilization data, the utilization status indicated by the utilization status data corresponding to the utilization data, and so on.

### (Step S302)

The incentive calculation unit 310 transmits incentive information indicating the calculated incentive to the data provision device 100.

The data usage fee calculation unit 320 transmits data usage fee information indicating the calculated data usage fee to the data utilization device 400.

### (Step S401)

The utilization data acquisition unit 410 transmits data indicating a provision request for utilization data to the data distribution management device 200.

### (Step S402)

The utilization data acquisition unit 410 acquires utilization data corresponding to the provision request from the data distribution management device 200.

### (Step S403)

The utilization status data transmission unit 420 utilizes the acquired utilization data, generates utilization status data indicating a record of utilizing the utilization data and so on, and transmits the generated utilization status data to the data distribution management device 200.

### (Step S404)

The data utilization device 400 acquires data usage fee information from the data value calculation device 300.

### *** Description of Effects of Embodiment 1 ***

A problem of the existing technology is that "MaaS-related operators may not provide data due to lack of benefit in providing data for the MaaS-related operators".

On the other hand, in this embodiment, each piece of utilization data utilized by a data user is managed in association with utilization status data indicating gain obtained by the data user through utilizing each piece of utilization data. Therefore, according to this embodiment, it is possible to grasp the status of utilization of each piece of utilization data by the data user. Moreover, in this embodiment, value of each piece of provided data is calculated based on the gain indicated by the utilization status data corresponding to each piece of provided data and information such as the freshness managed in association with each piece of provided data, and an incentive corresponding to the calculated value is presented to the data provider, making it easier for the data provider to perceive the benefit of providing data. Therefore, according to this embodiment, there is an effect of promoting provision of facility data and information data held by MaaS operators.

Therefore, according to this embodiment, it is possible to contribute realization of acceleration of data distribution among MaaS operators and expansion of transportation revenue of other transportation media in the neighborhood of railways, such as taxis and buses, with the railways as the main medium.

With the existing technology, the data distribution management device 200 requests dispatch to a taxi dispatch system based on data indicating a train operation status or the like provided by an operation management system, and only receives a result of the dispatch request and cannot grasp a situation in which the data provided by the operation management system is utilized in the taxi dispatch system. Therefore, with the existing technology, it is not possible to calculate value of provided data based on a utilization status of the provided data and provide an incentive corresponding to the calculated value to the operation management system, which is the provider of the provided data.

On the other hand, in this embodiment, by arranging that the data utilization device 400 includes the utilization status data acquisition unit 230 that acquires the utilization status data indicating profit and so on obtained by utilizing the utilization data and the utilization status data storage unit 292 that stores the utilization status data in association with the provided data and the freshness of the provided data at the time of utilization, it is possible to grasp the utilization status of the provided data. Furthermore, in this embodiment, the incentive calculation unit 310 is provided which calculates value of the provided data based on the utilization status of the provided data, and calculates an incentive corresponding to the calculated value for the provider of the provided data, so that it is possible to provide the incentive to the data provider according to the value of the provided data. Therefore, according to this embodiment, it becomes easier for data providers to perceive the benefit of providing data, so that provision of data by MaaS-related operators can be promoted. Moreover, according to this embodiment, data users can sufficiently acquire facility data and information data held by MaaS-related operators.

### *** Other Configurations ***

### <Variation 1>

In this variation, the provided data includes data indicating movement by a moving target using railways and including information about congestion in a railway facility.

The information about congestion is also called congestion information, and may be information indicating congestion in the railway facility or may be data used to estimate congestion in the railway facility.

The data used to estimate congestion in the railway facility is, as a specific example, variable load information of train cars, data of footage of surveillance cameras (footage of the inside of a station, footage of the inside of train cars, etc.), information indicating the temperature inside train cars, information acquired by ticket gates, a train reservation status (number of reservations for bullet trains and express trains, etc.), information visually observed by station staff or passengers, information indicating events held around the station, or information transmitted from terminals of passengers (Global Positioning System (GPS) information, information indicating transfer search records, etc.).

The incentive calculation unit 310 may adopt the following policies in addition to the policies in Embodiment 1. That is, the incentive calculation unit 310 may calculate an incentive based on the utilization status data and information about whether or not congestion information is information indicating congestion for each train car, or may calculate an incentive based on the utilization status data and information indicating the freshness of congestion information.

Policy 1-1: Policy to set a high incentive when data used to estimate congestion for each train car is provided. The data used to estimate congestion for each train car is, as a specific example, variable load information of the train car or footage data from a surveillance camera inside the train car.

Policy 1-2: Policy to set a high incentive when data with high freshness is provided as information about congestion. This data is, as a specific example, variable load information of train cars or footage data from surveillance cameras inside train cars.

As described above, according to this variation, it is possible to provide data users with real-time railway facility data and information data that are held by railway operators, not conventionally provided, and used to estimate real-time congestion situations in railway facilities.

### <Variation 2>

In this variation, the provided data includes information about operation management of a railway facility.

Information about operation management of a railway facility is highly demanded by other operators because it is useful in situations such as mutual direct operations conducted between railway companies, transfer from railways to other public transportation such as taxis and buses, and so on. It is assumed here that other operators can provide better service to users by obtaining information about more detailed operation management.

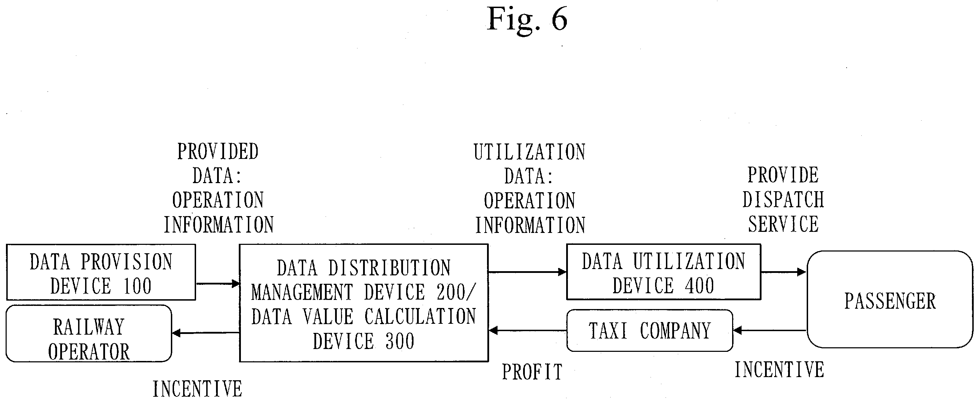

A specific example will be described below where the data provider is a railway operator and the data user is a taxi operator. Fig. 6 is a diagram describing a flow of data, a flow of incentives, and so on in this example.

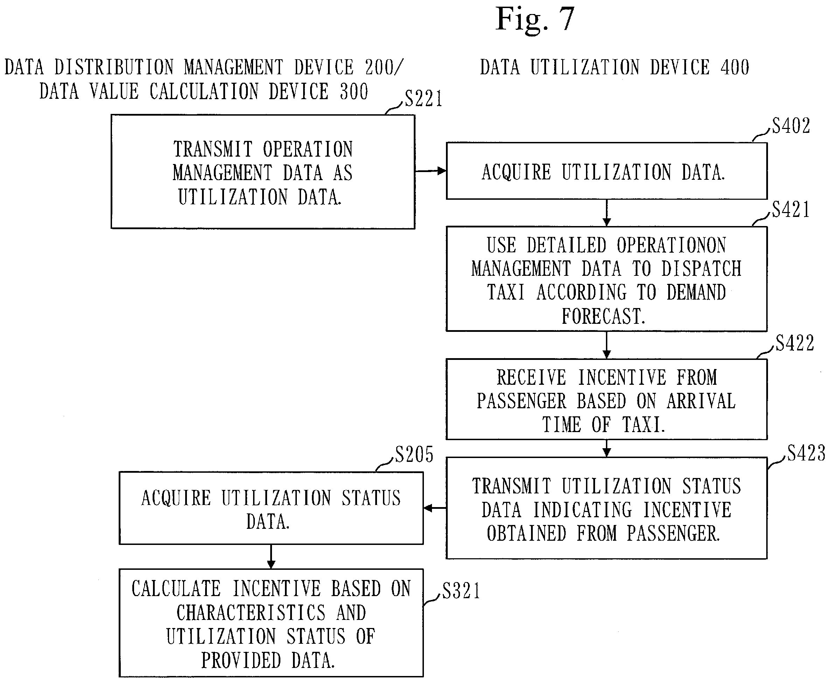

Fig. 7 is a flowchart illustrating part of processing performed by the data distribution management system 90 in this example. Using Fig. 7, the processing by the data distribution management system 90 will be described.

### (Step S221)

The taxi operator acquires, as utilization data, detailed information that is provided by the railway operator and relates to operation management of a train. As a specific example, this information is information indicating the number of people on the train who are carrying suitcases.

### (Step S421)

The taxi operator predicts demand for taxis using the acquired utilization data, and dispatches taxis to the station in time for the arrival time of the train at the station based on the predicted demand.

### (Step S422)

The taxi operator receives a greater incentive from a passenger as the waiting time of the passenger is shorter, and receives a smaller incentive from a passenger as the waiting time of the passenger is longer.

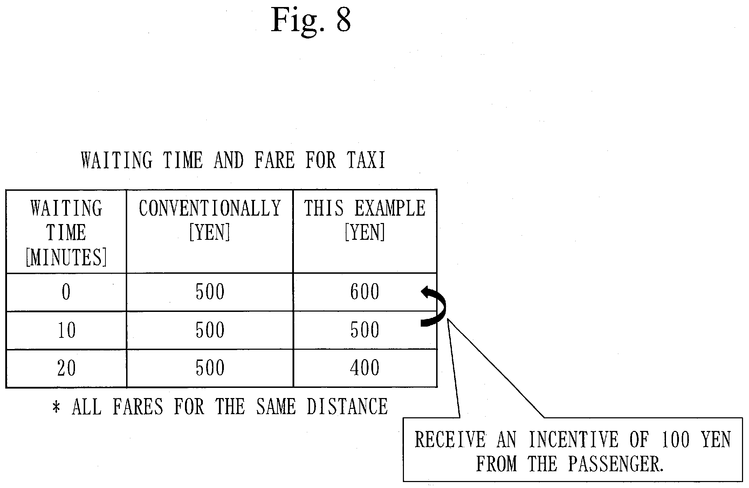

Fig. 8 illustrates a specific example of incentives received by the taxi operator. The fares shown in this example correspond to a certain distance. Conventionally, the taxi operator has received the same fare from passengers regardless of the waiting time of the passengers. However, in this example, the taxi operator receives an additional 100 yen in addition to the regular fare from a passenger when the waiting time of the passenger is 0 minutes, and receives no incentive from a passenger when the waiting time of the passenger is 10 minutes. When the waiting time of a passenger is as long as 20 minutes, the taxi operator may offer a discount on the fare regardless of the incentive.

### (Step S423)

The utilization status data transmission unit 420 transmits utilization status data indicating the incentive obtained by the taxi operator from the passenger as a utilization status to the data distribution management device 200.

### (Step S321)

The incentive calculation unit 310 calculates an incentive to be received by the railway operator in accordance with the incentive calculation policy described above, based on the incentive (profit) obtained by the taxi operator.

According to this example, since there is benefit for railway operators in providing detailed information, it is expected that railway operators will cooperate in providing more detailed information.

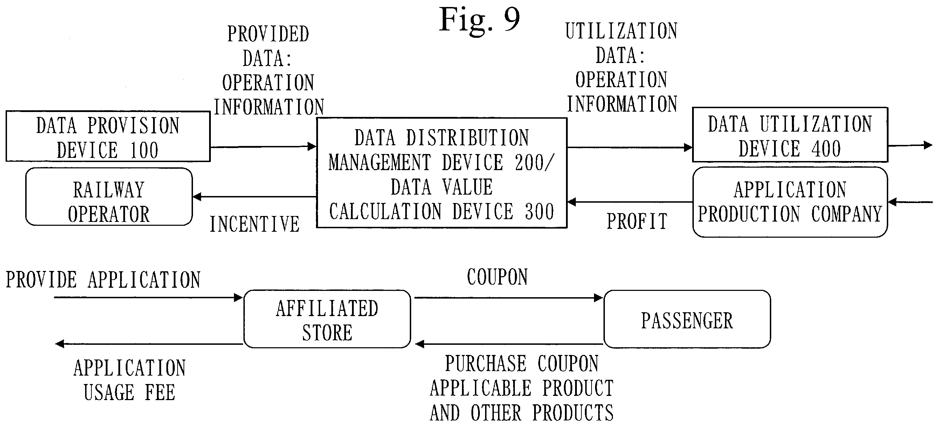

A specific example will be described below where the data provider is a railway operator and the data user is an application production company. "Application" is an abbreviation for software application. Fig. 9 is a diagram describing a flow of data, a flow of incentives, and so on in this example.

First, the application production company acquires detailed information about train operation management as utilization data.

Next, a passenger uses an application to search for a route to a destination, and the application displays a plurality of routes as search results.

Next, the passenger selects a route to use from the plurality of routes. If the passenger selects a route with low congestion, a coupon usable at an affiliated store is distributed to the passenger. The affiliated store is a store that is affiliated with the application and is the provider of the coupon.

Next, the passenger uses the distributed coupon at the affiliated store. When the passenger visits the affiliated store, the passenger may also purchase a product other than a product to which the coupon applies, resulting in profit for the affiliated store. Therefore, the application production company receives a portion of the profit generated at the affiliated store as an application usage fee.

Next, the incentive calculation unit 310 calculates an incentive to be received by the railway operator in accordance with the incentive calculation policy described above, based on the profit received by the application production company.

As described above, according to this variation, since incentives are granted for provision of information about operation management by railway operators, it is expected that railway operators will provide more detailed information about operation management.

### <Variation 3>

In this variation, the provided data includes sensor data of a railway facility, that is, data acquired by sensors installed in the railway facility.

Sensor data of railway facilities owned by railway operators may be useful not only to transportation operators but also to other operators. There may also be a case where a railway operator is considering entering a new business other than the main business (railway operation business), and wishes to obtain additional income by utilizing, in the new business, sensor data that has been so far used for operation of railways.

The sensors in the railway facility are, as a specific example, a road surface water level measurement sensor (sensor for checking whether tracks are submerged), a slope angle measurement sensor (sensor to measure inclination), a soil moisture measurement sensor (sensor for predicting landslides), a brightness measurement sensor, surveillance cameras (sensors installed in station premises, inside train cars, and alongside tracks), and a wind speed sensor.

The following situations are conceivable as specific examples of situations where other operators utilize data from each sensor.

Road surface water level measurement sensor, surveillance cameras alongside tracks, wind speed sensor: The Meteorological Agency, weather information companies, and the like utilize these sensors to improve the accuracy of weather information forecasts. Additionally, transport operators utilize these sensors to select safe transport routes.

Surveillance cameras in station premises, surveillance cameras inside train cars: Transfer applications utilize these sensors to obtain congestion information. Additionally, local governments and the like utilize these sensors to search for suspicious persons, missing persons, and the like.

Brightness measurement sensor: Car navigation manufacturers utilize brightness measurement sensors to measure the risk of driving cars around railway crossings.

The incentive calculation unit 310 calculates an incentive for the railway operator who owns the railway facility in accordance with the incentive calculation policy described above when other operators utilize the sensor data of the railway facility as described above.

As described above, according to this variation, data users can utilize various types of sensor data held by railway operators that have not conventionally been provided to other operators.

### <Variation 4>

This variation relates to an idea of using evaluation data corresponding to utilization data when the incentive calculation unit 310 calculates an incentive (Idea 1-1) and an idea of using evaluation data when a data user selects provided data (Idea 1-2). The evaluation data corresponding to the utilization data is data that indicates at least one of evaluation of the utilization data and evaluation of a data provider corresponding to the utilization data. The evaluation data is also data that indicates, with regard to each MaaS-related operator of a plurality of MaaS-related operators, at least one of evaluation of the utilization data corresponding to each MaaS-related operator and evaluation of each MaaS-related operator. As a specific example, the evaluation indicated by the evaluation data is determined using a method that evaluates data on a scale of about five levels, where data more useful to data users is given a higher score.

The provided data acquisition unit 210 according to this variation acquires provided data from each MaaS-related operator of the plurality of MaaS-related operators.

The utilization data transmission unit 220 according to this variation transmits evaluation data to the data utilization device 400, receives data indicating a data provision request generated in the data utilization device 400 based on the transmitted evaluation data, and transmits utilization data corresponding to the data provision request indicated by the received data to the data utilization device 400.

Differences in the operation of the data distribution management system 90 according to Idea 1-1 from the operation of the data distribution management system 90 according to Embodiment 1 will be mainly described below.

### (Step S205)

The utilization status data acquisition unit 230 acquires evaluation data corresponding to the utilization data along with the utilization status data from the data utilization device 400.

### (Step S206)

In addition to performing the processing described above, the utilization status data acquisition unit 230 associates the acquired evaluation data with the provided data corresponding to the evaluation data, and stores the evaluation data associated with the provided data in the utilization status data storage unit 292.

### (Step S301)

The incentive calculation unit 310 uses the evaluation data corresponding to the utilization data, in addition to the data described above, when calculating the incentive.

The data usage fee calculation unit 320 uses the evaluation data corresponding to the utilization data, in addition to the data described above, when calculating the data usage fee.

### (Step S403)

In addition to performing the processing described above, the utilization status data transmission unit 420 generates evaluation data corresponding to the utilization data, and transmits the generated evaluation data to the data distribution management device 200.

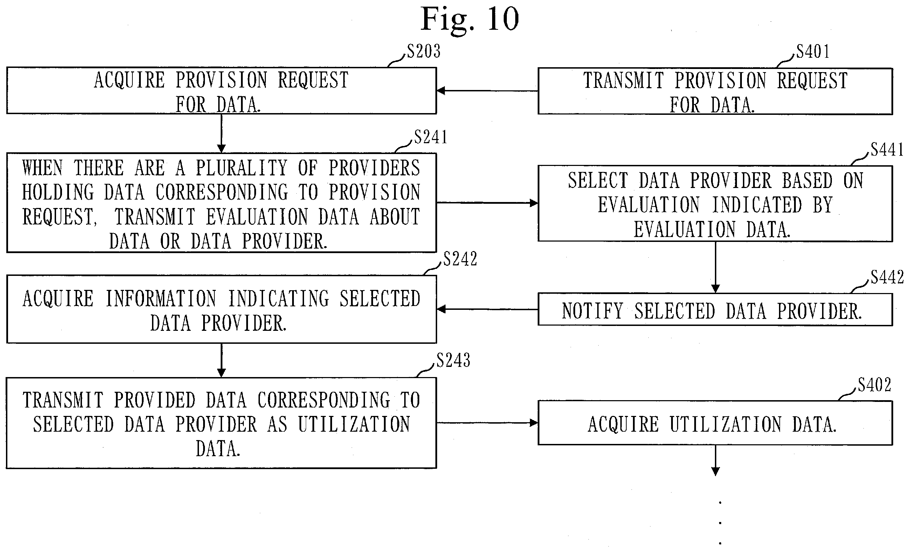

Fig. 10 is a flowchart illustrating part of an example of the operation of the data distribution management system 90 according to Idea 1-2. Differences in the operation of the data distribution management system 90 according to Idea 1-2 from the operation of the data distribution management system 90 according to Embodiment 1 will be mainly described below.

### (Step S241)

The utilization data transmission unit 220 transmits evaluation data corresponding to each piece of utilization data that corresponds to the provision request indicated by the data acquired in step S203 to the data user.

### (Step S242)

The utilization data transmission unit 220 acquires information indicating a selected data provider from the data utilization device 400.

### (Step S243)

The utilization data transmission unit 220 transmits, as utilization data, data that includes at least part of the provided data corresponding to the data provider indicated by the information acquired in step S242 to the data utilization device 400.

### (Step S441)

The utilization data acquisition unit 410 acquires the evaluation data corresponding to each piece of utilization data that corresponds to the provision request in step S401 from the data distribution management device 200.

The data user selects a data provider whose provided data is to be acquired based on the evaluation data in the data utilization device 400.

### (Step S442)

The utilization data acquisition unit 410 transmits data indicating the data provider selected by the data user to the data distribution management device 200.

As described above, according to this variation, when there are a plurality of data providers holding the same data or pieces of data that are similar to each other, the data user can select a data provider whose provided data is to be acquired based on the evaluation data. Therefore, according to this variation, competition related to provision of data among a plurality of data providers is promoted, and it is expected that each data provider will compete to offer more accurate data or each data provider will compete to provide more easily utilizable data.

### <Variation 5>

This variation relates to a method of distributing incentives to each data provider when there are a plurality of data providers.

The provided data acquisition unit 210 according to this variation acquires provided data from each MaaS-related operator of the plurality of MaaS-related operators.

The utilization data transmission unit 220 according to this variation generates utilization data using a plurality of pieces of provided data, and transmits the generated utilization data to the data utilization device 400.

The incentive calculation unit 310 according to this variation calculates an incentive for each data provider based on a data utilization status and a contribution rate of each data provider to the utilization data. The incentive calculation unit 310 may determine the contribution rate corresponding to each MaaS-related operator of the plurality of MaaS-related operators according to a utilization purpose of the utilization data in the data utilization device 400.

When each data provider is a railway operator, the contribution rate corresponding to each data provider is determined, as a specific example, based on at least one of the length of a railway line, the number of stations, the number of trains, the number of sensors, the number of sensor variations, and a coverage rate of sensors with regard to each data provider. The coverage rate of a certain sensor is a range that the sensor can detect. In urban areas, the coverage rate of each sensor is expected to be lower since the detection ranges of sensors often overlap, whereas in suburban areas, the coverage rate of each sensor is expected to be high since the detection ranges of sensors are less likely to overlap.

A specific example of a method for determining a contribution rate according to the utilization purpose of data in the data utilization device 400 will be described below.

As a specific example, when the utilization purpose of the data is route search, the incentive calculation unit 310 determines a contribution rate according to the length of the railway line owned by each data provider. In this case, the longer the railway line, the higher the contribution rate.

As described above, according to this variation, when the utilization data is data that involves a plurality of data providers, the incentive calculation unit 310 calculates an incentive for each data provider according to the contribution rate of each data provider to the utilization data. Therefore, according to this variation, it is possible to provide incentives relatively fairly to each data provider.

### <Variation 6>

In this variation, wishes of data providers for incentives are reflected in the incentives.

For utilization data according to this variation, a lower limit of incentives corresponding to the utilization data is set.

The data distribution management device 200 according to this variation manages a data catalog. The data catalog manages data indicating a minimum incentive point corresponding to each piece of utilization data and so on. The minimum incentive point is a point corresponding to a minimum value of an incentive required by a data provider for provision of provided data. If the incentive corresponding to the provided data falls below the minimum incentive point corresponding to the provided data, the data provider usually does not provide the provided data to the data user.

The utilization data transmission unit 220 according to this variation transmits the utilization data to the data utilization device 400 when the user of the data utilization device 400 accepts the lower limit of the incentive corresponding to the utilization data.

Differences in the operation of the data distribution management system 90 according to this variation from the operation of the data distribution management system 90 according to Embodiment 1 will be mainly described below.

### (Step S101)

The provided data transmission unit 110 performs the processing described above.

However, when providing the provided data, the data provider sets the minimum incentive point in a portion of the metadata of the provided data, and transmits the metadata of the provided data in which the minimum incentive point is set to the data distribution management device 200.

### (Step S401)

When requesting provision of data, the data user refers to the data catalog managed by the data distribution management device 200 and determines whether to request provision of utilization data based on the minimum incentive point indicated by the data catalog. The higher the minimum incentive point corresponding to certain utilization data, the higher the incentive given to the data provider corresponding to that utilization data, and thus the higher the data usage fee imposed on the data user utilizing that utilization data.

It may also be arranged that the data user can negotiate with the data provider about the minimum incentive point, such as that the data user conveys the intention of "requesting provision of data if the minimum incentive point is X points or less" to the data provider. The data provider may decide the minimum incentive point depending on the presented incentive.

### <Variation 7>

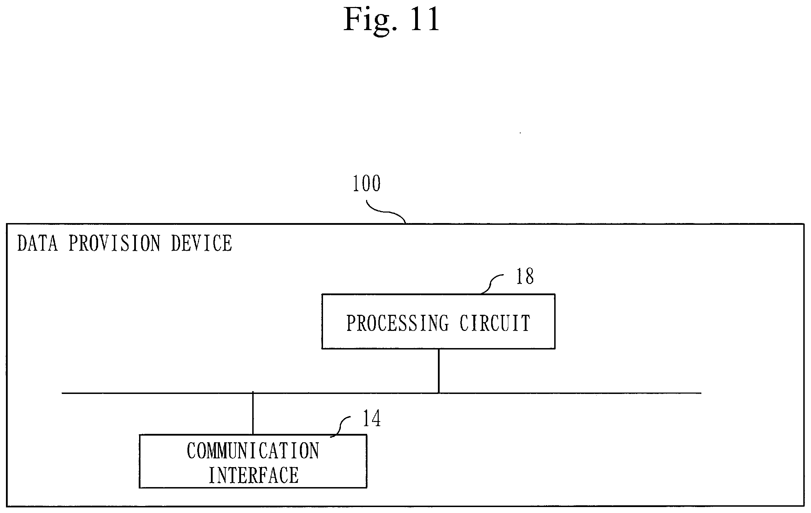

Fig. 11 illustrates an example of the hardware configuration of the data provision device 100 according to this variation.

The data provision device 100 includes a processing circuit 18 in place of the processor 11, in place of the processor 11 and the memory 12, in place of the processor 11 and the storage 13, or in place of the processor 11, the memory 12, and the storage 13.

The processing circuit 18 is hardware that realizes at least part of the components included in the data provision device 100.

The processing circuit 18 may be dedicated hardware, or may be a processor that executes programs stored in the memory 12.

When the processing circuit 18 is dedicated hardware, the processing circuit 18 is, as a specific example, a single circuit, a composite circuit, a programmed processor, a parallel-programmed processor, an application specific integrated circuit (ASIC), a field programmable gate array (FPGA), or a combination of these.

The data provision device 100 may include a plurality of processing circuits as an alternative to the processing circuit 18. The plurality of processing circuits share the role of the processing circuit 18.

In the data provision device 100, some functions may be realized by dedicated hardware, and the remaining functions may be realized by software or firmware.

The processing circuit 18 is realized by hardware, software, firmware, or a combination of these, as a specific example.

The processor 11, the memory 12, the storage 13, and the processing circuit 18 are collectively referred to as "processing circuitry". That is, the functional components of the data provision device 100 are realized by the processing circuitry.

The hardware configuration of each of the data distribution management device 200, the data value calculation device 300, and the data utilization device 400 may be substantially the same as the hardware configuration of the data provision device 100 according to this variation. Each device according to other embodiments may also have substantially the same configuration as that in this variation.

Embodiment 2.
Aspects different from the embodiment described above will be mainly described below with reference to the drawings.

### *** Description of Configuration ***

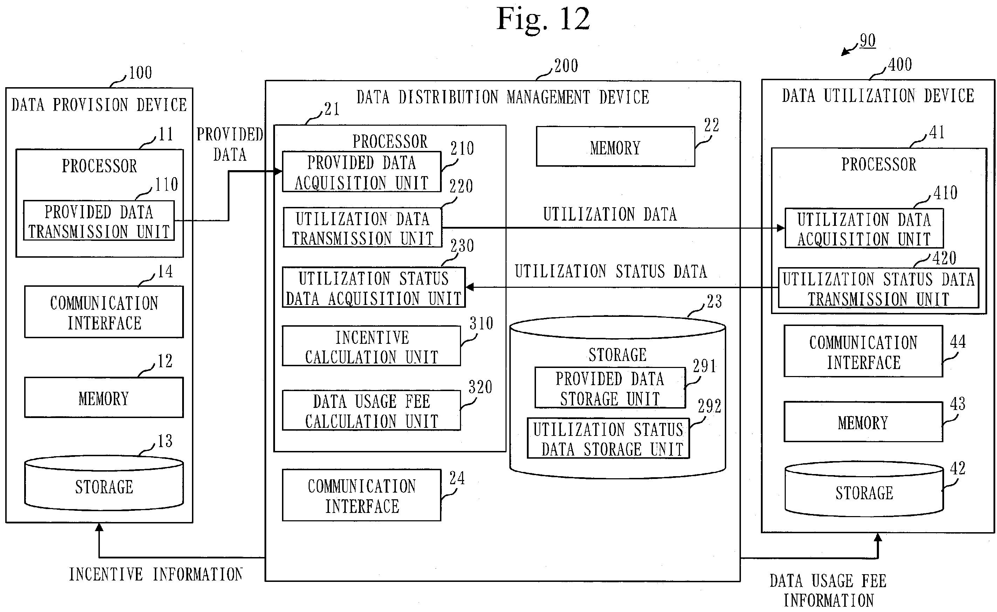

Fig. 12 illustrates an example of the configuration of the data distribution management system 90 according to this embodiment. As shown in Fig. 12, the data distribution management system 90 does not include the data value calculation device 300. The data distribution management device 200 includes the incentive calculation unit 310 and the data usage fee calculation unit 320, and does not include the utilization status data transmission unit 240.

### *** Description of Operation ***

The processing flow of the data distribution management system 90 according to this embodiment is substantially the same as the processing flow of the data distribution management system 90 according to Embodiment 1, except that there is no processing to transmit utilization status data from the data distribution management device 200.

### *** Description of Effects of Embodiment 2 ***

As described above, according to this embodiment, the data distribution management device 200 and the data value calculation device 300 are integrally configured. Therefore, according to this embodiment, it is possible to reduce the number of devices used in the data distribution management system 90 and also reduce a delay in processing due to communication between devices.

### Embodiment 3.

Aspects different from the embodiments described above will be mainly described below with reference to the drawings.

### *** Description of Configuration ***

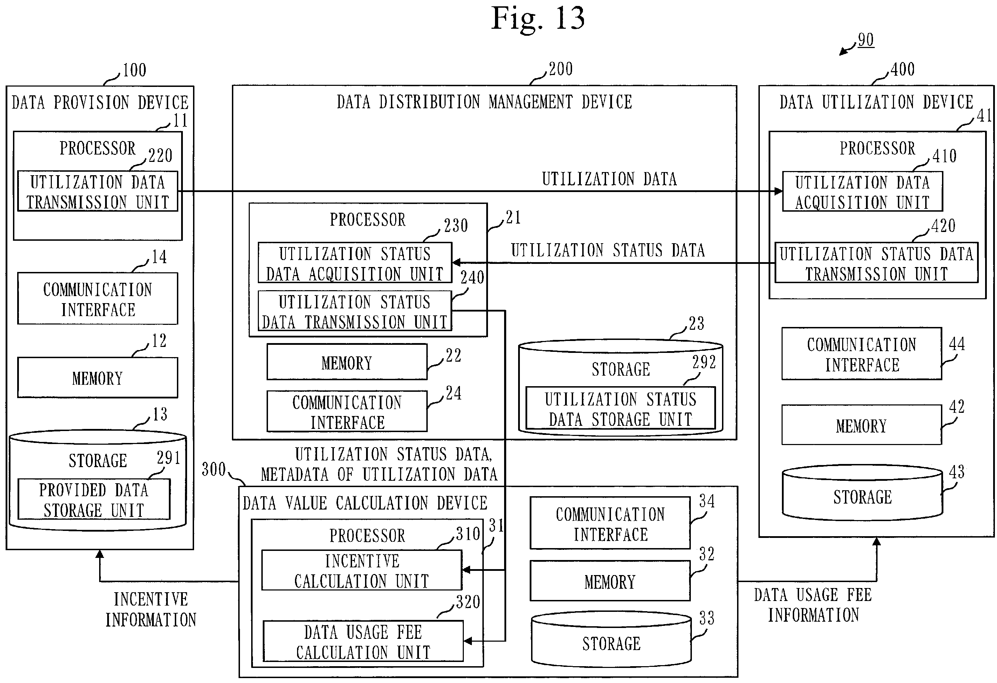

Fig. 13 illustrates an example of the configuration of the data distribution management system 90 according to this embodiment.

In this embodiment, as shown in Fig. 13, the provided data storage unit 291 and the utilization data transmission unit 220, which are included in the data distribution management device 200 in Embodiment 1, are included in the data provision device 100.

The data provision device 100 transmits utilization data to the data utilization device 400 using peer to peer (P2P) without going through the data distribution management device 200. Therefore, the function of the data distribution management device 200 is limited to the function of managing utilization status data transmitted from the data utilization device 400.

In the configuration shown in Fig. 13, there can be countless pairs of data providers and data users exchanging data. To ensure tamper resistance for data exchanges in all pairs, a blockchain technology may be used.

In Embodiment 3, as a countermeasure for not storing data provided from the data provision device 100 in the data distribution management device 200, the utilization status data acquisition unit 230 acquires the metadata of utilization data in addition to utilization status data from the data utilization device 400. Specific examples of items indicated by the metadata of the utilization data include a creator name, a user name, an editor name, a creation date, an update date, a storage location, a size, and a data definition.

### *** Description of Operation ***

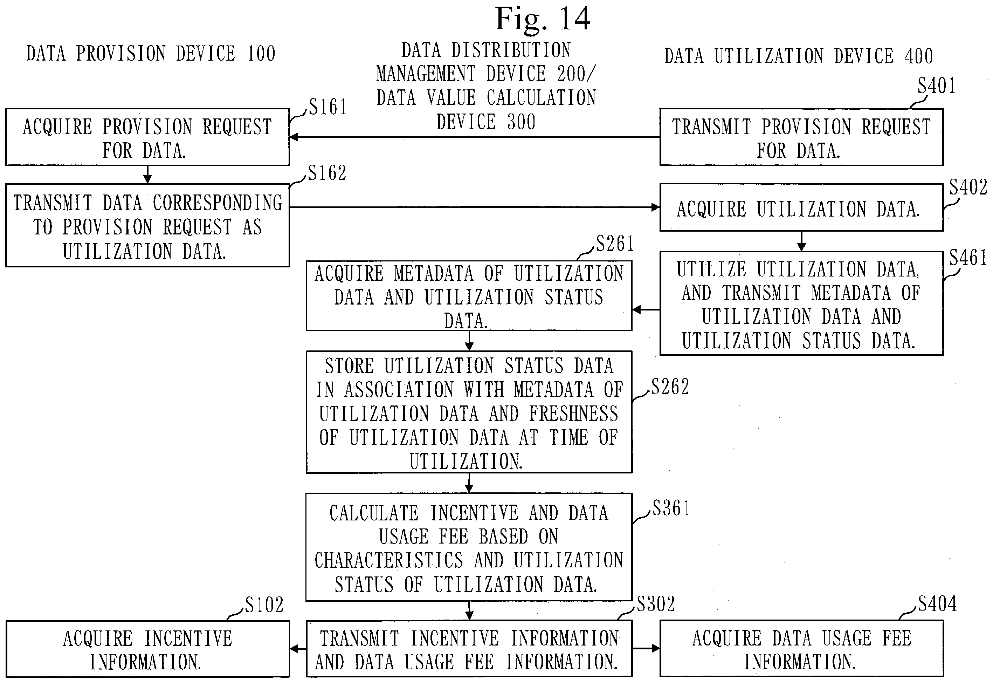

Fig. 14 is a flowchart illustrating an example of the operation of the data distribution management system 90. Using Fig. 14, the operation of the data distribution management system 90 will be described.

### (Step S161)

This step is substantially the same as step S203.

### (Step S162)

This step is substantially the same as step S204.

### (Step S261)

The utilization status data acquisition unit 230 acquires the metadata of the utilization data and the utilization status data from the data utilization device 400.

### (Step S262)

This step is substantially the same as step S206. However, the utilization status data acquisition unit 230 associates the utilization status data with the metadata of the utilization data.

### (Step S361)

This step is substantially the same as step S301.

### (Step S461)

The utilization status data transmission unit 420 transmits the metadata of the utilization data to the data distribution management device 200 in addition to performing the processing of step S403.

### *** Description of Effects of Embodiment 3 ***

As described above, according to this embodiment, instead of the data distribution management device 200 including the provided data storage unit 291, the data provision device 100 includes the provided data storage unit 291. Therefore, according to this embodiment, it is possible to reduce the cost of storage for storing provided data in the data distribution management device 200.

### *** Other Embodiments ***

The embodiments described above can be freely combined, or any component of each embodiment can be modified. Alternatively, any component in each embodiment can be omitted.

The embodiments are not limited to those indicated in Embodiments 1 to 3, and various changes can be made as necessary. The procedures described using flowcharts or the like may be appropriately changed.

### Reference Signs List

11, 21, 31, 41: processor; 12, 22, 32, 42: memory; 13, 23, 33, 43: storage; 14, 24, 34, 44: communication interface; 18: processing circuit; 90: data distribution management system; 100: data provision device; 110: provided data transmission unit; 200: data distribution management device; 210: provided data acquisition unit; 220: utilization data transmission unit; 230: utilization status data acquisition unit; 240: utilization status data transmission unit; 291: provided data storage unit; 292: utilization status data storage unit; 300: data value calculation device; 310: incentive calculation unit; 320: data usage fee calculation unit; 400: data utilization device; 410: utilization data acquisition unit; 420: utilization status data transmission unit.

## Claims

1. A data distribution management system comprising
a data distribution management device, the data distribution management device comprising:
a utilization status data acquisition unit to acquire utilization status data indicating a utilization status in a data utilization device of utilization data including at least part of provided data that is provided by a mobility as a service (MaaS)-related operator and corresponds to movement of a moving object; and
a utilization status data transmission unit to transmit the utilization status data as data corresponding to the provided data to a data value calculation device including an incentive calculation unit that calculates an incentive for the MaaS-related operator for providing the provided data based on the utilization status data.

2. A data distribution management system comprising
a data value calculation device, the data value calculation device comprising an incentive calculation unit to calculate an incentive for a mobility as a service (MaaS)-related operator for providing provided data, based on utilization status data indicating a utilization status in a data utilization device of utilization data including at least part of the provided data that is provided by the MaaS-related operator and corresponds to movement of a moving object.

3. A data distribution management system comprising a data distribution management device and a data value calculation device,
the data distribution management device comprising
a utilization status data acquisition unit to acquire utilization status data indicating a utilization status in a data utilization device of utilization data including at least part of provided data that is provided by a mobility as a service (MaaS)-related operator and corresponds to movement of a moving object,
the data value calculation device comprising
an incentive calculation unit to calculate an incentive for the MaaS-related operator for providing the provided data based on the utilization status data,
wherein the data distribution management device further comprises
a utilization status data transmission unit to transmit the utilization status data as data corresponding to the provided data to the data value calculation device.

4. The data distribution management system according to any one of claims 1 to 3,
wherein the utilization status data includes information indicating gain obtained by utilizing the utilization data.

5. The data distribution management system according to any one of claims 1 to 4,
wherein the provided data is associated with data indicating freshness of the provided data, and
wherein the incentive calculation unit calculates the incentive according to the freshness of the provided data.

6. The data distribution management system according to any one of claims 1 to 5,
wherein the provided data is associated with data indicating a usage restriction on the provided data, and
wherein the utilization data is data that complies with the usage restriction on the provided data.

7. The data distribution management system according to any one of claims 1 to 6,
wherein the data value calculation device further comprises
a data usage fee calculation unit to calculate a data usage fee for the data utilization device for utilizing the utilization data based on the utilization status data.

8. The data distribution management system according to any one of claims 1 to 7,
wherein the MaaS-related operator is a railway operator, and
wherein the provided data includes data indicating movement using a railway by the moving object.

9. The data distribution management system according to claim 8,
wherein the provided data includes congestion information that is information about congestion in a railway facility.

10. The data distribution management system according to claim 9,
wherein the incentive calculation unit calculates the incentive based on the utilization status data and information about whether the congestion information is information indicating congestion for each train car.

11. The data distribution management system according to claim 9 or 10,
wherein the incentive calculation unit calculates the incentive based on the utilization status data and information indicating freshness of the congestion information.

12. The data distribution management system according to any one of claims 1 to 7,
wherein the MaaS-related operator is a railway operator, and
wherein the provided data includes information about operation management of a railway facility.

13. The data distribution management system according to any one of claims 1 to 7,
wherein the MaaS-related operator is a railway operator, and
wherein the provided data includes data acquired by a sensor provided in a railway facility.

14. The data distribution management system according to any one of claims 1 to 7,
wherein the data utilization device generates evaluation data indicating at least one of evaluation of the utilization data and evaluation of the MaaS-related operator providing the provided data, and
wherein the incentive calculation unit calculates the incentive based on the utilization status data and the evaluation data.

15. The data distribution management system according to claim 1 or 3,
wherein when there are a plurality of MaaS-related operators, each being the MaaS-related operator,
the data distribution management device further comprises
a provided data acquisition unit to acquire the provided data from each MaaS-related operator of the plurality of MaaS-related operators; and
a utilization data transmission unit to transmit, with regard to each MaaS-related operator of the plurality of MaaS-related operators, evaluation data indicating at least one of evaluation of utilization data corresponding to each MaaS-related operator and evaluation of each MaaS-related operator to the data utilization device, receive data indicating a data provision request generated in the data utilization device based on the transmitted evaluation data, and transmit utilization data corresponding to the data provision request indicated by the received data to the data utilization device.

16. The data distribution management system according to any one of claims 1 to 7,
wherein when there are a plurality of MaaS-related operators, each being the MaaS-related operator,
the utilization data is data generated using the provided data acquired from each MaaS-related operator of the plurality of MaaS-related operators, and
the incentive calculation unit calculates an incentive for each MaaS-related operator of the plurality of MaaS-related operators based on the utilization status data and a contribution rate to the utilization data of each MaaS-related operator of the plurality of MaaS-related operators.

17. The data distribution management system according to claim 16,
wherein the incentive calculation unit determines a contribution rate corresponding to each MaaS-related operator of the plurality of MaaS-related operators according to a utilization purpose of the utilization data in the data utilization device.

18. The data distribution management system according to claim 1 or 3,
wherein a lower limit of an incentive corresponding to the utilization data is set for the utilization data, and
wherein the data distribution management device further comprises
a utilization data transmission unit to transmit the utilization data to the data utilization device when a user of the data utilization device accepts the lower limit of the incentive corresponding to the utilization data.

19. A data distribution management method comprising:
acquiring utilization status data indicating a utilization status in a data utilization device of utilization data including at least part of provided data that is provided by a mobility as a service (MaaS)-related operator and corresponds to movement of a moving object, by a computer; and
transmitting the utilization status data as data corresponding to the provided data to a data value calculation device including an incentive calculation unit that calculates an incentive for the MaaS-related operator for providing the provided data based on the utilization status data, by the computer.

20. A data distribution management method comprising
calculating an incentive for a mobility as a service (MaaS)-related operator for providing provided data, based on utilization status data indicating a utilization status in a data utilization device of utilization data including at least part of the provided data that is provided by the MaaS-related operator and corresponds to movement of a moving object, by a computer.

21. A data distribution management method comprising:
acquiring utilization status data indicating a utilization status in a data utilization device of utilization data including at least part of provided data that is provided by a mobility as a service (MaaS)-related operator and corresponds to movement of a moving object, by a first computer;
calculating an incentive for the MaaS-related operator for providing the provided data based on the utilization status data, by a second computer; and
transmitting the utilization status data as data corresponding to the provided data to the second computer, by the first computer.

22. A data distribution management program that causes a data distribution management device, which is a computer, to execute:
a utilization status data acquisition process of acquiring utilization status data indicating a utilization status in a data utilization device of utilization data including at least part of provided data that is provided by a mobility as a service (MaaS)-related operator and corresponds to movement of a moving object; and
a utilization status data transmission process of transmitting the utilization status data as data corresponding to the provided data to a data value calculation device that executes an incentive calculation process of calculating an incentive for the MaaS-related operator for providing the provided data based on the utilization status data.

23. A data distribution management program that causes a data distribution management device, which is a computer, to execute
an incentive calculation process of calculating an incentive for a mobility as a service (MaaS)-related operator for providing provided data, based on utilization status data indicating a utilization status in a data utilization device of utilization data including at least part of the provided data that is provided by the MaaS-related operator and corresponds to movement of a moving object.

24. A data distribution management program that causes a data distribution management device, which is a computer, to execute
a utilization status data acquisition process of acquiring utilization status data indicating a utilization status in a data utilization device of utilization data including at least part of provided data that is provided by a mobility as a service (MaaS)-related operator and corresponds to movement of a moving object; and
causes a data value calculation device, which is a computer, to execute
an incentive calculation process of calculating an incentive for the MaaS-related operator for providing the provided data based on the utilization status data,
wherein the data distribution management program further causes the data distribution management device to execute
a utilization status data transmission process of transmitting the utilization status data as data corresponding to the provided data to the data value calculation device.
